# EUROPÄISCHE PATENTSCHRIFT

(11) **EP 1 060 821 B1**
(45) Veröffentlichungstag und Bekanntmachung des Hinweises auf die Patenterteilung: **31.03.2004**
(21) Anmeldenummer: 00109413.5
(22) Anmeldetag: 03.05.2000
(51) Int. Cl.: B23D 51/02, B23D 49/16

(54) **Handgeführte Stichsäge mit L-förmigem Lagersteg für Motorwelle und Getriebe**
Hand held jigsaw with l-shaped bearing element for motor shaft and gearing
Scie sauteuse à main avec support en forme de L ayant des paliers pour l'abre moteur et le système de transmission

(30) Priorität: 04.05.1999 DE 19920347
(43) Veröffentlichungstag der Anmeldung: 20.12.2000
(73) Patentinhaber: Atlas Copco Electric Tools GmbH, 71364 Winnenden (DE)
(72) Erfinder: Langhoff, Boris, 71522 Backnang (DE); Vögele, Roland, 71364 Winnenden (DE); Beuthner, Michael, 70199 Stuttgart (DE)
(74) Vertreter: Wasmuth, Rolf, Dipl.-Ing.

(56) Entgegenhaltungen:
- GB-A- 2 174 642
- US-A- 2 796 768
- US-A- 2 931 402
- US-A- 4 545 123
- US-A- 5 188 188

## Beschreibung

Die Erfindung betrifft ein handgeführtes Arbeitsgerät, insbesondere eine Stichsäge, nach dem Oberbegriff des Patentanspruchs 1. Ein solcher ist z.B. aus der US-A-4 545 123 bekannt.

Eine andere bekannte Stichsäge weist eine Antriebseinheit mit einem Elektromotor und einen Arbeitsteil mit einem Exzenterantrieb auf, der ein Sägeblatt hin- und herbewegt. Die gegenüber dem Arbeitsteil etwa rechtwinklig liegende Antriebseinheit ist in einem als Handgriff gestalteten Gehäuseabschnitt angeordnet und über einen Ein/Aus-Schalter zu betätigen. Die Halterung und Lagerung des Motors wie der Getrieberäder des Exzenterantriebs ist im Werkzeuggehäuse vorgesehen, wozu entsprechende Lagerbuchsen im Gehäuse vorzusehen sind. Das Werkzeuggehäuse ist entsprechend belastbar aus einem geeigneten Material auszubilden, um alle auftretenden Arbeitskräfte aufzunehmen. Dies führt bei großen Profimaschinen zu einem erhöhten Gesamtgewicht, was die Handhabbarkeit einschränkt.

Der Erfindung liegt die Aufgabe zugrunde, ein gattungsgemäßes Arbeitsgerät derart weiterzubilden, daß bei insgesamt leichtem Aufbau alle auftretenden Arbeitskräfte sicher abgefangen werden.

Die Aufgabe wird durch die kennzeichnenden Merkmale des Anspruchs 1 gelöst.

Durch die Verwendung eines alle Arbeitskräfte, insbesondere auch äußere Abstützkräfte und die Kräfte des Antriebs, aufnehmenden Lagersteges kann das Werkzeuggehäuse selbst mit geringer Wandstärke und somit leicht ausgeführt werden. Neben Leichtmetall sind insbesondere einfache Kunststoffe für das Werkzeuggehäuse einsetzbar, ohne daß die Gesamtbelastbarkeit des Arbeitsgerätes beeinträchtigt ist. Das Werkzeuggehäuse hat nur noch die Funktion einer gegebenenfalls isolierenden Verkleidung, in die der Lagersteg mit dem daran vormontierten Arbeitsteil als vorgefertigtes Gesamtmodul eingesetzt wird.

Durch die an dem Lagersteg befestigte Auflageplatte einer einstellbaren Werkzeugabstützvorrichtung, z.B. die Bodenplatte einer Stichsäge, werden alle Abstützkräfte des Arbeitsgerätes in den Lagersteg eingeleitet, wodurch die Gehäusewand entlastet ist.

Vorteilhaft ist der Lagersteg zwischen dem Anker und dem Getriebe angeordnet. So steht eine vollständige Seite der Lagerplatte zur Anordnung eines Getriebes zur Verfügung, welches auch eine gegenläufig zur Hubbewegung eines Exzenterantriebes bewegte Massenausgleichsplatte umfassen kann.

Vorteilhaft weist der Lagersteg einen Durchgangskanal als Ausblaskanal für den Kühlluftstrom auf, der auf die Schnittstelle des Werkzeugs im Werkstück gerichtet sein kann. Die Schnittstelle ist so frei von Spänen, so daß eine gute optische Kontrolle der Führung möglich ist.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:
- Fig. 1: einen Längsschnitt durch ein als Stichsäge ausgeführtes Arbeitsgerät mit einem zentralen Lagersteg,
- Fig. 2: einen Längsschnitt durch einen Lagersteg längs der Linie II-II in Fig. 3 mit einem Ausblaskanal für Kühlluft,
- Fig. 3: eine getriebeseitige Ansicht auf einen Lagerabschnitt des Lagersteges nach Fig. 2,
- Fig. 4: eine perspektivische Darstellung des Lagersteges nach Fig. 2.

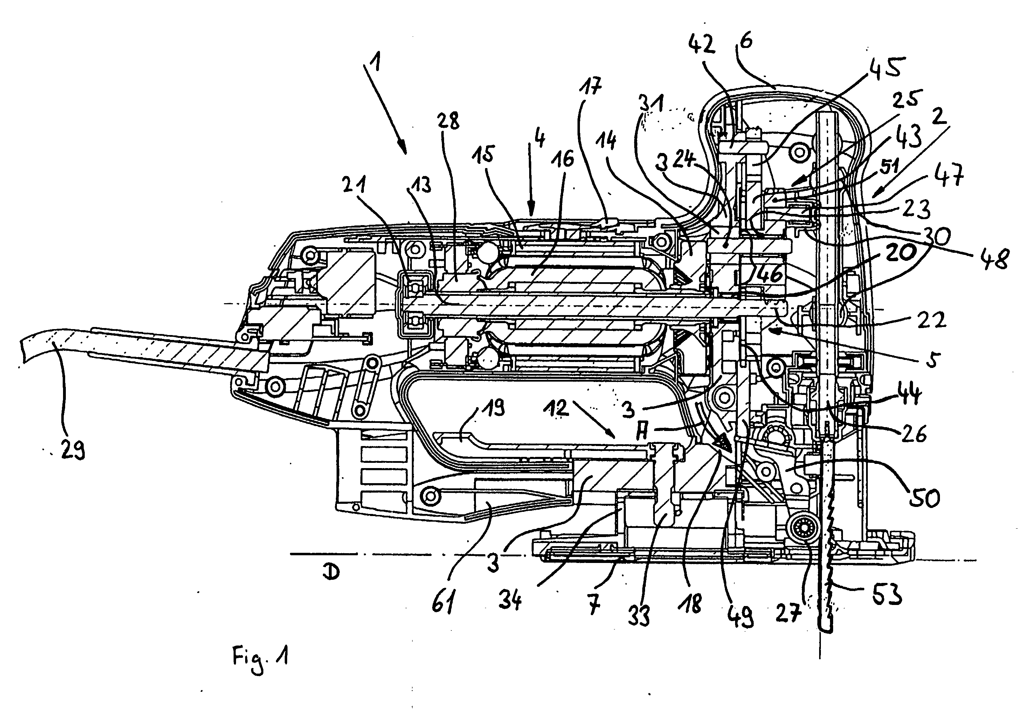

Fig. 1 zeigt einen Längsschnitt durch eine Stichsäge mit einem Werkzeuggehäuse 6, in dem eine Antriebseinheit 1 und ein Arbeitsteil 2 angeordnet sind. Zwischen der Antriebseinheit 1 und dem Arbeitsteil 2 ist ein Lagersteg 3 angeordnet, der ein vom Werkzeuggehäuse 6 getrenntes Bauteil ist und im Werkzeuggehäuse 6 unverlierbar gehalten ist. Hierzu ist der Lagersteg 3 in nicht näher dargestellten Aufnahmen vorzugsweise formschlüssig im Werkzeuggehäuse 6 gehalten. Zweckmäßig ist das Werkzeuggehäuse 6 am Lagersteg 3 montiert. Bei dem dargestellten motorbetriebenen, handgeführten Arbeitsgerät liegt die Antriebseinheit 1 relativ zum Arbeitsteil 2 etwa im rechten Winkel. Die Antriebseinheit 1 weist einen elektrischen Antriebsmotor 4 auf, dessen Motorwelle 13 in einem Wellenlager 20 als erstes Motorlager im Lagersteg 3 und in einem im Gehäuse 6 gehaltenen zweiten Motorlager 21 gelagert ist. Auf der Motorwelle 13 sind, ausgehend vom zweiten Motorlager 21, ein Kommutator 28, ein Anker 16 und ein Lüfterrad 14 angeordnet. Die Motorwelle 13 durchragt das Motorlager 20 im Lagersteg 3 und ist an ihrem herausragenden Ende als Antriebsritzel 22 ausgebildet. Der Anker 16 liegt in einer gehäusefesten Feldwicklung 15, die über eine Anschlußleitung 29 an eine Stromversorgung anzuschließen ist. Der die Antriebseinheit 1 aufnehmende Gehäuseabschnitt ist als Handgriff gestaltet, in dem der Ein/Aus-Schalter 17 für den Elektromotor 4 vorgesehen ist.

Das Arbeitsteil 2 weist eine in Gleitlagern 30 gelagerte, von einem Exzenterantrieb 25 angetriebene Hubstange 26 auf, wobei die Drehzahl des Exzenterantriebes 25 mittels eines schrägverzahnten Stirnradgetriebes 5, bestehend aus dem Antriebsritzel 22 und einem Stirnrad 51 gegenüber der Motordrehzahl reduziert wird. Das Stirnrad 51 ist an einem Lagerbolzen 24 unter Verwendung eines Wälzlagers 23 drehbar gehalten. Der Lagerbolzen 24 ist im Lagerabschnitt 9 des Lagersteges 3 unter Zwischenschaltung einer Montagehülse 31 fixiert. An dem einer Auflageplatte 7 zugewandten Ende der Hubstange 26 ist ein Sägeblatt 53 zu befestigen.

Der Lagersteg 3 ist als L-förmiges Bauteil ausgeführt, wobei ein parallel zur Hubstange 26 liegender Lagerabschnitt 9 Aufnahmen 8 für den Lagerbolzen 24 des Stirnrades 51 und des Wellenlagers 20, als erstes Motorlager der Motorwelle 13 aufweist. An den Lagerabschnitt 9 schließt mit einem Winkel α von etwa 90° ein Anschlußabschnitt 10 an, der etwa parallel und mit Abstand zur Motorwelle 13 liegt. Der Lagerabschnitt des Lagersteges 3 weist zudem drei Aufnahmen 39 für Führungsbolzen 42 auf, die gemäß Ansicht nach Fig. 3 ein gleichschenkliges Dreieck bilden, dessen Schenkel länger als die Hypothenuse sind. Die Spitze des Dreiecks liegt am freien Ende des Lagerabschnittes 9. Die Führungsbolzen 42 greifen in entsprechende Langlöcher 45 einer Massenausgleichsplatte 43 ein. Die Massenausgleichsplatte 43 wird von einem am Stirnrad 51 angeordneten Exzenterzapfen 46 angetrieben, der dem Lagerabschnitt 9 des Lagersteges 3 zugewandt ist und gegenläufig zur Hubbewegung der Hubstange 26 parallel zu dieser bewegt wird. Ein zwischen Massenausgleichsplatte 43 und Lagersteg 3 gelagerter Kipphebel 44 wird ebenso von dem Exzenterzapfen 46 angetrieben und bewegt einen Stößel 49 auf und ab. Der Stößel 49 wirkt auf einen Winkelhebel 50, dessen anderes Ende eine Laufrolle 27 trägt, die das Sägeblatt 53 zyklisch zur Hubbewegung vor und zurück bewegt. Auf der dem Exzenterzapfen 46 abgewandten Seite ist am Stirnrand 51 in Drehrichtung um 180° versetzt ein weiterer Exzenterzapfen 47 angeordnet. Der Exzenterzapfen 47 greift in eine U-förmige Mitnahmeschiene 48 der Hubstange 26 ein und generiert die Hubbewegung der Hubstange.

In Fig. 1 ist am Anschlußabschnitt 10 ein Schnellspannverschluß 12 vorgesehen, der einen Spannhebel 19 und einen Bolzen 33 zum Festlegen einer Auflageplatte 7 einer Werkzeugabstützvorrichtung aufweist. Die Auflageplatte 7 weist an ihrer dem Anschlußabschnitt 10 des Lagersteges 3 zugewandten Seite einen im Querschnitt kreissegmentartigen Tragsockel 34 auf, der mit seiner kreisbogenförmigen Außenfläche an einer Gegenfläche des Anschlußabschnittes 10 anliegt. Die Gegenfläche ist vom Boden einer im Querschnitt bogensegmentförmig ausgebildeten Aufnahme 40 im Lagersteg 3 gebildet. Durch die aneinanderliegenden kreis- bzw. bogensegmentförmigen Kontaktflächen der Auflageplatte 7 und der Aufnahme 40 im Anschlußabschnitt 10 ist ein vorzugsweise stufenloses Verschwenken der Teile zueinander um eine Längsachse D möglich. Dadurch ist mit der dargestellten Stichsäge ein Gehrungsschnitt möglich.

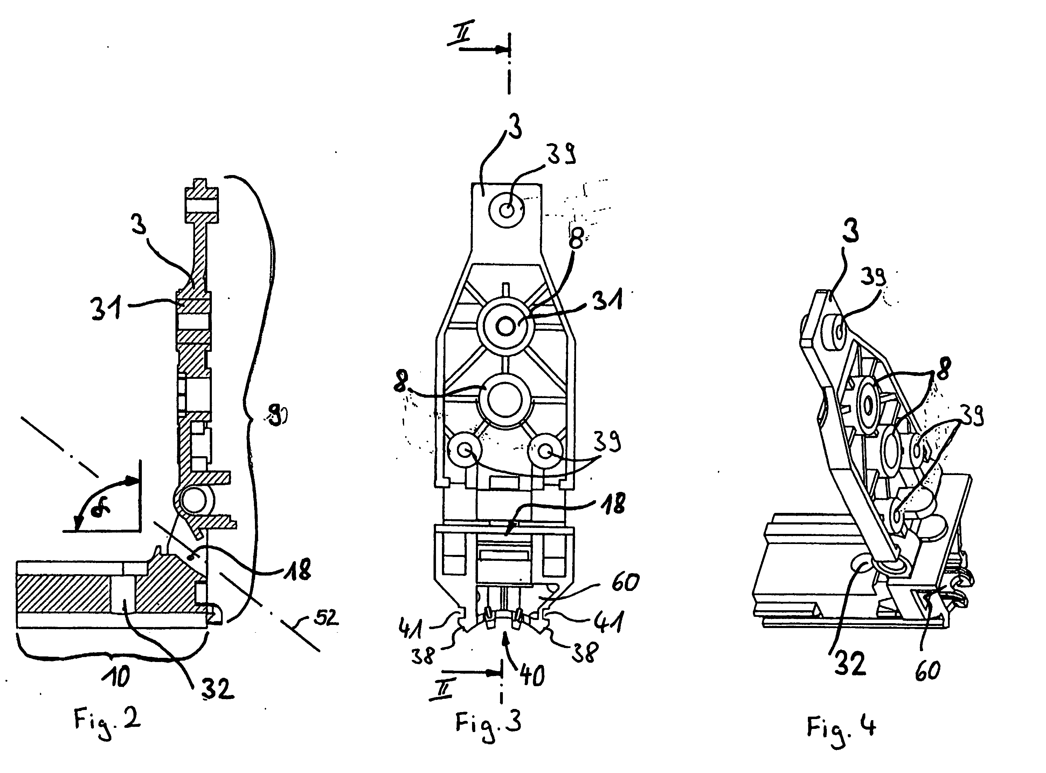

Alle auf die Auflageplatte 7 wirkenden Kräfte werden direkt in den Anschlußabschnitt 10 eingeleitet, so daß das Werkzeuggehäuse 6 von Stützkräften entlastet ist. Der Anschlußabschnitt 10 des Lagersteges 3 ist vorteilhaft als Hohlprofil torsionssteif ausgebildet. Die Oberflächen des Anschlußabschnittes 10 bilden Gehäuseflächen des Arbeitsgerätes. Der Anschlußabschnitt 10 ist an seinen dem Werkzeuggehäuse 6 zugewandten Rändern 38 mit Nuten 41 versehen, in die Seitenränder des Werkzeuggehäuses 6 formschlüssig eingreifen. Aus Fig. 2 ist ein Durchgangskanal 18 im Lagersteg 3 ersichtlich. Er liegt im Bereich der Abwinkelung des Lagersteges 3 nahe dem Übergang vom Lagerabschnitt 9 zum Anschlußabschnitt 10. Der als Luftkanal genutzte Durchgangskanal 18 ist derart angeordnet, daß ein durch ihn geführter austretender Kühlluftstrom A auf die Schnittstelle im Werkstück bzw. auf das Werkzeug, nämlich ein Sägeblatt 53, gerichtet ist. Die Längsmittelachse 52 des Durchgangskanals 18 bildet dabei vorzugsweise etwa die Winkelhalbierende des Winkels α zwischen dem Lagerabschnitt 9 und dem quer dazu liegenden Anschlußabschnitt 10 (Fig. 2). Die im Anschlußabschnitt 10 des Lagersteges 3 vorgesehene Bohrung 32 dient dem Durchtritt eines Bolzens 33 des Schnellspannverschlusses 12.

Aus der Ansicht des Lagersteges 3 gemäß Fig. 3 und 4 ist die Mündung des Durchgangskanals 18 für den Kühlluftaustritt ersichtlich. Der Lagerabschnitt 9 zeigt ferner die Aufnahmen 8, in die das Wellenlager 20 bzw. die Montagehülse 31 aufgenommen sind. Der Lagersteg 3 ist als selbständiges Bauteil vorteilhaft zum formschlüssigen Einsetzen in Aufnahmen des Werkzeuggehäuses 6 vorgesehen.

Der Lagersteg 3 ist zentraler Träger aller wesentlichen antriebsmechanischen Baugruppen sowie der Auflageplatte 7, so daß das Werkzeuggehäuse 6 frei von statischen und dynamischen Arbeitskräften ist. Das Werkzeuggehäuse 6 kann somit aus leichten Materialien dünnwandig ausgeführt sein, insbesondere aus Kunststoff. Der Lagersteg 3 selbst ist zweckmäßig aus einem Leichtmetall (Aluminium, Magnesium) bzw. einer entsprechenden Legierung, vorteilhaft aus einem Kunststoff, insbesondere faserverstärktem Kunststoff, gefertigt. Die Anwendung eines erfindungsgemäßen Lagersteges ist auch in anderen handgeführten Arbeitsgeräten, wie beispielsweise einer Handkreissäge oder Schleifgeräten zweckmäßig.

Nach dem Durchgangskanal 18 zum Ausblasen der Motorkühlluft ist im Anschlußabschnitt 10 ein in Richtung der Längsachse D verlaufender Absaugkanal 60 ausgebildet, der aus dem Bereich des Sägeblattes 55 nach hinten verläuft. Der im Abschnitt 10 des Lagersteges 3 ausgebildete Absaugkanal 60 schließt an seinem dem Sägeblatt 53 zugewandten Ende an einen Gehäusekanalabschnitt 61 an, der - ebenfalls in Richtung der Längsachse D verlaufend - im Gehäuse 6 ausgebildet ist. Der Gehäusekanalabschnitt 61 ist an seinem dem Lagersteg 3 abgewandten Ende trichterartig erweitert, z.B. zum Einstecken eines Saugschlauches.

## Patentansprüche

1. Handgeführtes Arbeitsgerät, insbesondere Stichsäge oder dgl., mit einer einen Antriebsmotor (4) mit einem Anker (16) und einer Motorwelle (13) aufweisenden Antriebseinheit (1), welche über ein Getriebe (5) mit einem Arbeitsteil (2) verbunden ist, wobei der Arbeitsteil (2) und die Antriebseinheit (1) von einem Werkzeuggehäuse (6) umschlossen sind, und mit einer Auflageplatte (7) zur Abstützung des Arbeitsgerätes am Werkstück, wobei in dem Werkzeuggehäuse (6) ein vom Werkzeuggehäuse (6) getrennter Lagersteg (3) gehalten ist, an dem das Getriebe (5) und die Motorwelle (13) gelagert sind, **dadurch gekennzeichnet, daß** der Lagersteg (3) die auf die Auflageplatte (7) wirkenden Kräfte aufnimmt, und daß der Lagersteg (3) in Aufnahmen des Werkzeuggehäuses (6) festliegt.

2. Arbeitsgerät nach Anspruch 1,
**dadurch gekennzeichnet, daß** der Lagersteg (3) zwischen dem Anker (16) und dem Getriebe (5) angeordnet ist.

3. Arbeitsgerät nach Anspruch 1 oder 2,
**dadurch gekennzeichnet, daß** der Lagersteg (3) ein Lagerelement (24) für ein Getrieberad (51) sowie ein Wellenlager (20) für die Motorwelle (13) aufweist.

4. Arbeitsgerät nach einem der Ansprüche 1 bis 3,
**dadurch gekennzeichnet, daß** der Lagersteg (3) Aufnahmen (39) für Führungsbolzen (42) aufweist, die eine Massenausgleichsplatte (43) und einen Kipphebel (44) führen.

5. Arbeitsgerät nach einem der Ansprüche 1 bis 4,
**dadurch gekennzeichnet, daß** der Lagersteg (3) einen Lagerabschnitt (9) und einen vorzugsweise einteilig angeformten Anschlußabschnitt (10) zur Halterung der Auflageplatte (7) aufweist.

6. Arbeitsgerät nach Anspruch 5,
**dadurch gekennzeichnet, daß** der Anschlußabschnitt (10) und der Lagerabschnitt (9) in einem Winkel (α) von vorzugsweise etwa 90° zueinander liegen.

7. Arbeitsgerät nach einem der Ansprüche 1 bis 6,
**dadurch gekennzeichnet, daß** die Auflageplatte (7) um eine zur Motorwelle (13) parallele Längsachse (D) verschwenkbar ist.

8. Arbeitsgerät nach einem der Ansprüche 1 bis 7,
**dadurch gekennzeichnet, daß** zwischen dem Anker (16) und dem Lagersteg (3) auf der Motorwelle (13) ein Lüfterrad (14) angeordnet ist, dessen geförderter Kühlluftstrom (A) über eine stationäre Feldwicklung (15) und den Anker (16) in Richtung zum Lagersteg (3) strömt.

9. Arbeitsgerät nach Anspruch 8,
**dadurch gekennzeichnet, daß** der Lagersteg (3) einen Durchgangskanal (18) als Ausblaskanal für den Kühlluftstrom (A) aufweist, der vorzugsweise auf das Werkzeug ausgerichtet ist.

10. Arbeitsgerät nach einem der Ansprüche 1 bis 9,
**dadurch gekennzeichnet, daß** der Lagersteg (3) aus einem faserverstärkten Kunststoff oder Leichtmetall besteht.

## Claims

1. Hand-operated instrument, particularly a compass saw or suchlike, with a drive unit having a drive motor (4) with an armature (16) and a motor shaft (13) which is connected to a working part (2) by means of gearing (5), whereby the working part (2) and the drive unit (1) are surrounded by a tool housing (6), and with a supporting plate (7) for supporting the instrument on the workpiece, whereby a bearing stem (3) that is separate from the tool housing (6) is held in the tool housing (6), the gearing (5) and the motor shaft (13) being born on the bearing stem (3), **characterized in that** the bearing stem (3) takes up the forces acting on the supporting plate (7), and the bearing stem (3) is held fixed in uptake means of the tool housing (6).

2. Hand-operated instrument in accordance with claim 1,
**characterized in that** the bearing stem (3) is disposed between the armature (16) and the gearing (5).

3. Hand-operated instrument in accordance with claim 1 or 2,
**characterized in that** the bearing stem (3) has a bearing element (24) for a gear wheel (51) and a shaft bearing (20) for a motor shaft (13).

4. Hand-operated instrument in accordance with one of claims 1 to 3,
**characterized in that** the bearing stem (3) has uptake means (39) for guide bolts (42) which guide a counterbalance plate (43) and a rocker arm (44).

5. Hand-operated instrument in accordance with one of claims 1 to 4,
**characterized in that** the bearing stem (3) has a bearing section (9) and a connection section (10), for holding the supporting plate (7), which is preferably formed as a single piece.

6. Hand-operated instrument in accordance with one of claims 1 to 5,
**characterized in that** the connection section (20) and the bearing section (9) lie at an angle (α) of preferably approximately 90° in relation to each other.

7. Hand-operated instrument in accordance with one of claims 1 to 6,
**characterized in that** the support plate (7) can swivel about a longitudinal axis (D) running parallel to the motor shaft (13).

8. Hand-operated instrument in accordance with one of claims 1 to 7,
**characterized in that** a fan wheel (14), the conveyed cooling air (A) of which flows over a stationary field coil (15) and the armature (16) in the direction of the bearing stem (3), is disposed between the armature (16) and the bearing stem (3) on the motor shaft (13).

9. Hand-operated instrument in accordance with claim 8,
**characterized in that** the bearing stem (3) has a through channel (18) as a discharge channel for the flow of cooling air (A) that is preferably aligned on the tool.

10. Hand-operated instrument in accordance with one of claims 1 to 9,
**characterized in that** the bearing stem (3) is made of a fibre-reinforced synthetic material or light metal.

## Revendications

1. Machine de travail manoeuvrée et guidée à la main, notamment scie sauteuse ou machine similaire, comprenant une unité d'entraînement (1) qui présente un moteur d'entraînement (4) avec un induit (16) et un arbre de moteur (13), et qui est reliée à une partie de travail (2) par l'intermédiaire d'un système de transmission (5), la partie de travail (2) et l'unité d'entraînement (1) étant entourées par un carter d'outil (6), l'ensemble comprenant également une plaque d'appui (7) pour appuyer la machine de travail sur la pièce à usiner, et un support de palier (3) distinct du carter d'outil (6) et sur lequel sont montés des paliers du système de transmission (5) et de l'arbre de moteur (13), étant tenu dans le carter d'outil (6),
**caractérisée en ce que** le support de palier (3) absorbe les efforts agissant sur la plaque d'appui (7), et **en ce que** le support de palier (3) est fixé dans des logements de réception du carter d'outil (6).

2. Machine de travail selon la revendication 1,
**caractérisée en ce que** le support de palier (3) est disposé entre l'induit (16) et le système de transmission (5).

3. Machine de travail selon la revendication 1 ou 2,
**caractérisée en ce que** le support de palier (3) présente un élément de palier (24) pour une roue de transmission (51), ainsi qu'un palier d'arbre (20) pour l'arbre de moteur (13).

4. Machine de travail selon l'une des revendications 1 à 3, **caractérisée en ce que** le support de palier (3) comporte des logements de réception (39) pour des chevilles de guidage (42), qui guident une plaque d'équilibrage des masses (43) et un levier oscillant (44).

5. Machine de travail selon l'une des revendications 1 à 4, **caractérisée en ce que** le support de palier (3) présente un tronçon de montage de palier (9) et, de préférence formé d'un seul tenant avec celui-ci, un tronçon de raccordement (10) destiné à supporter la plaque d'appui (7).

6. Machine de travail selon la revendication 5, **caractérisée en ce que** le tronçon de raccordement (10) et le tronçon de montage de palier (9) sont disposés de manière à former entre eux un angle (α) de préférence d'environ 90°.

7. Machine de travail selon l'une des revendications 1 à 6, **caractérisée en ce que** la plaque d'appui (7) peut pivoter autour d'un axe longitudinal (D) parallèle à l'arbre de moteur (13).

8. Machine de travail selon l'une des revendications 1 à 7, **caractérisée en ce que** sur l'arbre de moteur (13), entre l'induit (16) et le support de palier (3), est disposée une roue de ventilateur (14) dont l'écoulement d'air de refroidissement (A) refoulé, s'écoule en passant par un enroulement d'excitation (15) stationnaire et l'induit (16), en direction du support de palier (3).

9. Machine de travail selon la revendication 8, **caractérisée en ce que** le support de palier (3) présente un canal de passage (18) en tant que canal de soufflage pour l'écoulement d'air de refroidissement (A), qui de préférence est dirigé vers l'outil.

10. Machine de travail selon l'une des revendications 1 à 9, **caractérisée en ce que** le support de palier (3) est réalisé en une matière plastique renforcée de fibres ou en un métal du type alliage léger.
